# EUROPÄISCHE PATENTANMELDUNG

(11) **EP 1 401 182 A1**
(43) Veröffentlichungstag der Anmeldung: **24.03.2004**
(21) Anmeldenummer: 02021028.2
(22) Anmeldetag: 20.09.2002
(51) Int. Cl.: H04M 3/523, H04M 3/51, H04Q 11/04

(54) **Anwesenheitsanrufzentrale für abgehende Anrufe**

(71) Anmelder: Siemens AG, 80333 München (DE)
(72) Erfinder: Fritz, Robert, 2232 Deutsch Wagram (AT)
(74) Vertreter: Berg, Peter, Dipl.-Ing.

(57) **Zusammenfassung**

Verfahren zum Betreiben eines Kommunikationsnetzes (KN) bei dem ein Call Center (CC) Daten an einen Communikationsteilnehmer (TlnA) übermittelt, wobei das Call Center aus im Kommunikationsnetz topologisch verteilt angeordneten Organisationseinheiten (OE1,...,OEk,...,OEm) besteht, die an Vermittlungsknoten VK angeschlossene sind, mit den Schritten:
- Ermitteln einer verfügbaren ersten Organisationseinheit (OE1) welche dem Kommunikationsteilnehmer (TlnA) örtlich am nächsten liegt,
- Herstellen eines ersten Kommunikationskanals(KK1) zwischen der ersten und einer zweiten Organisationseinheit (OEm), die in einem Speicher (DSm) die zu übermittelnden Daten enthält,
- Übertragen der Daten von der zweiten Organisationseinheit (OEm) zur ersten Organisationseinheit (OE1),
- Herstellen eines zweiten Kommunikationskanals (KK2) zwischen der ersten Organisationseinheit (OE1) und dem Kommunikationsteilnehmer (TlnA),
- Übertragen der Daten von der ersten Organisationseinheit (OE1) an den Kommunikationsteilnehmer (TlnA).

## Beschreibung

### Technisches Gebiet

Die Erfindung betrifft ein Verfahren zum Betreiben eines Kommunikationsnetzes bei dem ein Call Center Daten an einen Kommunikationsteilnehmer übermittelt, wobei das Call Center aus Organisationseinheiten besteht, die im Kommunikationsnetz topologisch verteilt angeordnet und an Vermittlungsknoten angeschlossene sind.

### Stand der Technik

Ein Call Center ist ein Dienstleistungsunternehmen, welches operatorgestützte Sprachdienste anbietet. Ein Call Center ist mit einer Anrufzentrale vergleichbar, bei der eine Gruppe von speziellen Mitarbeitern, sog. Agenten, telefonische Anfragen bearbeiten. Typische Einsatzbereiche sind Versandhäuser, Versicherungen und Kundenservice sowie Kunden-Hotline.

Um die Auslastung eines Call Centers zu erhöhen sind sogenannte Outbound Call Center bekannt, das sind Organisationsformen, bei denen die Agenten des Call Centers nicht nur eingehende Anrufe bearbeiten, sondern in verkehrsschwachen Zeiten auch aktiv nach draußen telefonieren. Ein Call Center das auch ausgehenden Verkehr abwickelt, wird zu einem Verkaufsinstrument, das aktiv Telefonmarketing betreiben kann und auch Neukunden gewinnen kann. Die Umwidmung eines Agenten, der anfänglich nur eingehende Anrufe bearbeitet, in einen Agenten, der aktiv nach draußen telefoniert, kann durch technische Einrichtungen des Call Centers automatisch erfolgen. Ferner können durch einen sogenannten Automatic Call Distributor Agenten auch zu Gruppen zusammengefasst werden, die für einen bestimmten Bereich temporär zuständig sind. Die Aufgaben dieser Gruppen können wechseln.

Bei einem Call Center ist üblich, dass Anrufer in Spitzenzeiten in Warteschlangen geführt werden und abhängig von der Länge der Warteschlange die Zuordnung der Bearbeiter geändert wird. In einem gemischten Call Center können Agenten, die Outbound-Verkehr abwickeln kurzfristig zu Gruppen mit Inbound-Aufgaben umgeschaltet werden. Dadurch ist eine flexible Anpassung des Call Centers an schwankendes Verkehrsaufkommen möglich.

In einem Call Center fließen verschiedene Kommunikationskanäle zusammen. Jeder der Agenten hat einen effizienten Zugriff sowohl auf Produkt- als auch auf Kundendatenbanken. Die von einem Call Center angebotene Dienstleistung gehen daher zunehmend über Sprachdienste hinaus und umfassen allgemeine Datenübermittlung.

Ein Call Center kann in unterschiedlichen Unternehmensbereichen, wie Marketing, Marktforschung, Consulting, Verkauf/Vertrieb und Kundendienst sowie sonstige Serviceleistungen integriert sein.

Mit wachsendem Aufgabengebiet erhöht sich die Komplexität der Organisation eines Call Centers. Wenn anfänglich die Zahl der Mitarbeiter eines Call Centers häufig unter hundert lag, sind heute Call Center mit bis hin zu über tausend Agenten bekannt. Diese sitzen nicht in einem zentralen Büro, sondern ihr Arbeitsplatz befindet sich in räumlich verteilten Büros, ggf. auch in privaten Wohnungen. Dadurch kann sich das Call Center auch organisatorisch in Einheiten gliedern, die auf mehrere Standorte verteilt sind. Üblicherweise ist jeder dieser Standorte über Anschlussleitungen mit einem Vermittlungsknoten eines Weitverkehrsnetzes, beispielsweise dem diensteintegrierenden digitalen Nachrichtennetz ISDN, verbunden und die Organisationseinheiten sind untereinander vernetzt. Ein Weitverkehrsnetz erstreckt sich üblicherweise auf einen nationalen Raum und umfasst sowohl terrestrische Festnetze als auch Mobilfunknetze, wodurch eine große Zahl von Kommunikationsteilnehmern gleichzeitig miteinander kommunizieren kann. Das Internet, als globales Netz wächst mehr und mehr mit regionalen öffentlichen bzw. vormals öffentlichen Telekommunikationsnetzen, die ursprünglich ausschließlich für Sprachübertragung konzipiert waren, zusammen. In diese Struktur der Kommunikationsnetze sind verteilte Call Center üblicherweise eingebunden.

Wenn von einem Outbound Call Center Informationen nach draußen übermittelt werden, sind Nutzkanäle im Kommunikationsnetz belegt. Die physikalische Länge der Nutzkanäle wird durch die örtliche Entfernung zwischen Datenquelle und Datensenke vorgegeben. Der Umfang der zu übertragenden Information schwankt je nach der vom Call Center angebotenen Dienstleistung: Information betreffend den Verkauf von Produkten ist meist umfangreicher, als eine automatische Gruß- oder Erinnerungsinformation oder als ein Weckruf. Insbesondere bei Kurznachrichten, wie Gruß- und Erinnerungsnachrichten, ist der Aufwand für den Verbindungsaufbau und für das Belegen von Nutzkanälen vergleichsweise hoch. Es fallen vergleichsweise hohe Übertragungskosten an. Diese werden je nach Rolle der Beteiligten, d.h. Netzbetreiber, Dienstbetreiber, Dienstanbieter oder Dienstkunden, weiter verrechnet. Der Betreiber eines Call Centers ist daran interessiert die Übertragungskosten, die für seinen Betrieb anfallen möglichst gering zu halten.

### Darstellung der Erfindung

Der Erfindung liegt die Aufgabe zu Grunde, ein Verfahren zum Betreiben eines Kommunikationsnetzes anzugeben, bei dem die Übermittlung von Daten von einer Organisationseinheit eines Call Centers an einen Kommunikationsteilnehmer einfacher möglich ist und weniger Kosten verursacht.

Diese Aufgabe wird erfindungsgemäß bei einem Verfahren der eingangs genannten Art mit den kennzeichnenden Merkmalen des Patentanspruchs 1 gelöst. Auf vorteilhafte Ausgestaltungen der Erfindung nehmen die Unteransprüche Bezug.

Der Erfindung liegt der Gedanke einer zweistufigen Datenübertragung zugrunde: In einer ersten Stufe werden die Daten innerhalb der Organisation des Call Centers an eine Einheit des Call Centers übertragen, welche -örtlich gesehendem Dienstkunden am nächsten liegt. Von dort erfolgt in einer zweiten Stufe die Datenübertragung an den Dienstkunden. Der Übertragungsweg führt also nicht direkt von der Daten-Quelle zur Daten-Senke, sondern über eine, dem Ziel der Datenübertragung örtlich nächstliegende Organisationseinheit des Call Centers. Da die Organisationseinheiten über Vermittlungsknoten untereinander vernetzt sind, eröffnet sich die Möglichkeit, im Netz neben Nutzkanälen auch Kommunikationskanäle zu nutzen, die sonst zur Lenkung der Datenströme vorgesehen sind. Der Transport der Daten kann so über weite Strecken durch eine standardisierte Organisation der Signalisierungskanäle des Netzes effizient abgewickelt werden. Für Kurznachrichten, wie Gruß- und Erinnerungsnachrichten sowie Weckrufe ist diese schrittweise Abwicklung der Datenübertragung besonders günstig. Auch bei großen Datenmengen, deren Übertragung je nach Auslastung zumindest temporär über Signalisierungskanäle geführt werden kann, verringern sich die Belegzeiten der Nutzkanäle und in Folge davon die anfallenden Kosten.

Erfindungsgemäß wird so verfahren, dass zunächst eine erste Organisationseineinheit des Call Centers ermittelt wird, welche dem Endteilnehmer örtlich am nächsten liegt; dies kann eine Ortsvermittlungsstelle oder ein Mobilfunk-Gateway sein. Zu diesem Punkt im Netz wird von einer zweiten Organisationseinheit, in deren Speicher die Daten gespeichert sind, ein Kommunikationskanal hergestellt und die Daten übertragen. Nach dem Eintreffen dieser Daten stellt diese erste Organisationseinheit einen zweiten Kommunikationskanal her, der die erste Organisationseinheit mit dem Dienstnutzer verbindet. Abschließend erfolgt über diesen zweiten Übertragungskanal die Übertragung der Daten zu diesem Endteilnehmer.

In einer bevorzugten Ausführungsform umfasst das Kommunikationsnetz das diensteintegrierende digitale Nachrichtennetz ISDN, so dass die Übertragung der Daten zwischen der zweiten Organisationseinheit und der ersten Organisationseinheit über den Zentralen Zeichengabekanal erfolgen kann. Im Bereich der terrestrischen Telekommunikationsnetze ist ISDN ein weit verbreiteter Standard und ermöglicht eine gleichzeitige Übertragung von Sprache und Daten. Letzteres ist insbesondere für aktuelle und zukünftige Betriebsformen von Call Center von Bedeutung. Bei einem ISDN-Netz sind Nutz- und Signalisierungswege getrennt, - sowohl logisch als auch physikalisch: die Leitungen zur Nutzdatenübertragung verlaufen separat zu den Leitungen, die Signalisierungsinformationen übertragen. Durch diese Trennung entsteht ein eigenes Zeichengabenetz, ein sogenanntes Overlay-Netz, das je nach Betriebsart zumindest zeitweise neben dem Nutzkanalnetz existiert. Der Zeichengabekanal des Overlay-Netzes kann für den Datentransport vom Call Center zum Teilnehmer genutzt werden. Auf Grund der weitgehend standardisierten Übertragungsprozeduren in diesem Übertragungsweg, ist dies hinsichtlich der Übertragungskosten besonders günstig.

Hierbei ist von Vorteil, wenn die Übertragung der Daten durch das Zeichengabesystem Common Channel Signalling No. 7 erfolgt. Im ISDN ist das ITU-T-Zeichengabesystem Nr.7, (Common Channel Signalling System No. 7 (CCSS No. 7)), kurz SSNr.7, weitgehend standardisiert. Es sorgt im Zeichengabenetz zwischen den digitalen Vermittlungsstellen für den Auf- und Abbau der 64-kbit/s Nutzkanalverbindungen, und dient auch zur Steuerung von ISDN-Diensten. Die Ermittlung der örtlich zum Kommunikationsteilnehmer nächstliegenden Organisationseinheit eines Call Center Standortes vereinfacht sich dadurch erheblich: Anhand der Identifizierungsnummer, diese ist Bestandteil des Zeichengabesystem Common Channel Signalling No. 7, ist jede digitale Vermittlungsstelle im SSNr.7-Netz bereits eindeutig bestimmt. Damit liegt die Information zur Auswahl eines optimalen Übertragungsweges im ISDN-Netz bereits vor.

Da die Teilnehmernummer eines rufenden Teilnehmers im ISDN-Netz übertragbar ist, kann es auch günstig sein, wenn diese Teilnehmernummer bei der Ermittlung der örtlich nächstliegenden, verfügbaren Call Center Organisationseinheit verwendet wird. Auch hier ist die Information für eine optimale Wegwahl netzintern bereits vorhanden.

Bevorzugt wird beim Herstellen eines Kommunikationskanals zwischen der zweiten Organisationseinheit und der ersten Organisationseinheit so vorgegangen, dass ein Antrag zum Belegen eines Call Center Agenten an die erste Organisationseinheit gestellt wird. Wird der Antrag angenommen, so ist ein Agent verfügbar. Für den Fall, dass auf Grund von Überlastung in der angesprochenen Einheit kein Agent verfügbar ist, kann eine, zu dieser angesprochenen Organisationseinheit nächstliegende ermittelt und in den Übertragungsweg eingeschaltet werden. Eine optimale Route kann so auch in verkehrsstarken Zeiten erreicht werden. Eine Routingtabelle, in der die Verfügbarkeit einzelner Organisationseinheiten des Call Centers gelistet sind, erleichtert das Auffinden einer verfügbaren und gleichzeitig topologisch günstigen Organisationseinheit.

Hinsichtlich der Datensicherheit ist von Vorteil, wenn der Antrag zum Belegen eines Agenten die Übermittlung einer Transaktionsaktionsnummer umfasst. Durch diese Transaktionsnummer kann sichergestellt werden, dass nur ein autorisierter Agent eine Zugriffsberechtigung auf die Daten eines Kommunikationsteilnehmers erhält.

Von Vorteil ist ferner, wenn die Daten in den sogenannten Signalling End Points, das sind jene Vermittlungsknoten an denen Verbindungen beginnen oder enden, speicherbar sind. Dadurch ist die Übertragung der Daten im Netz entkoppelt und ein stufenweiser Ablauf der Datenübertragung einfach realisierbar.

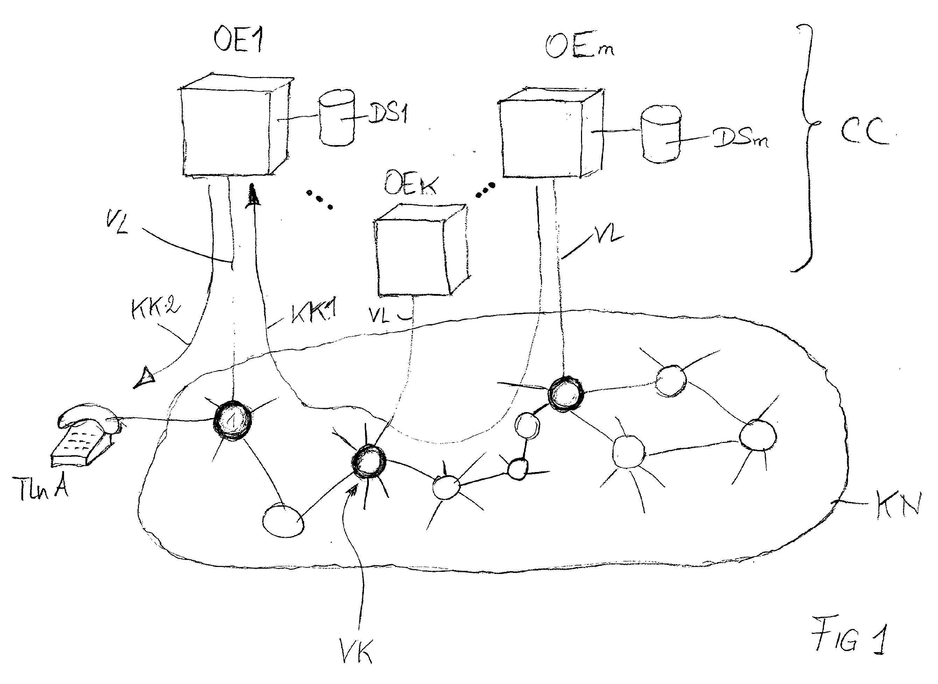

### Kurzbeschreibung der Zeichnung

Die oben beschriebenen Aufgaben, Vorteile und Merkmale der vorliegenden Erfindung sowie noch weitere werden aus der nachstehenden detaillierten Beschreibung und der schematischen Darstellung der beiliegenden einzigen Zeichnung leichter verständlich.

### Ausführung der Erfindung

In der Zeichnung ist die Netzstruktur eines Kommunikationsnetzes in einer bevorzugten Ausführung der Erfindung schematisch dargestellt. Ein Call Center CC gliedert sich in verschiedene Organisationseinheiten OE1, ..., OEk, ..., OEm. Diese sind jeweils über Verbindungsleitungen VL an Vermittlungsknoten VK des diensteintegrierenden digitalen Netzes ISDN, in der Zeichnung mit dem Bezugszeichen KN bezeichnet, angeschlossen. Räumlich gesehen sind die einzelnen Organisationseinheiten OE1, ..., OEk, ..., OEm regional im Kommunikationsnetz KN verteilt. Das dargestellte Teilstreckennetz verbindet die als Kreise dargestellten Vermittlungsstellen bzw. Vermittlungsknoten. In der zeichnerischen Darstellung sind Vermittlungsknoten mit angeschlossener Call Center Einheit grau hinterlegt. Die Art der Verbindungen zwischen den Organisationseinheiten OE1, ..., OEk, ..., OEm ist durch Zeichengabekanäle und/oder über Datenleitungen hergestellt.

Der Zeichnung ist eine erste Organisationseinheit OE1 entnehmbar, die zum Teilnehmer T1nA örtlich am nächsten liegt. Sie ist an einen ISDN-Vermittlungsknoten VK angeschlossen.

Bei einem Outbound-Betrieb des Call Centers CC soll nun möglichst einfach und kostengünstig eine Datenübertragung zum Teilnehmer T1nA hergestellt werden. Dies erfolgt herkömmlich durch einen Verbindungsaufbau zwischen der Datenquelle, einer Organisationseinheit des Call Centers in der die zu übertragenden Daten vorhanden sind, und der Datensenke, dem Endteilnehmer. Die Übermittlung erfolgte auf Nutzkanälen. Hier greift die Erfindung ein. Die erfindungsgemäße Betriebsweise des Kommunikationsnetzes berücksichtigt nämlich die Infrastruktur des ISDN-Netzes. Es wird automatisch jener Weg gewählt, der die geringst möglichen Ressourcen belegt. Wenn vom Call Center CC aus eine Verbindung zu einem Endkunden T1nA hergestellt wird, verläuft der Übertragungsweg über weite Entfernungen nicht über Nutzkanäle, sondern bezieht den Zentralen Zeichengabekanal des ISDN-Netzes mit ein. Zunächst muss die rufende Call Center Organisationseinheit eine Information darüber erhalten, welche der netzweit verteilten Einheiten OE1, ..., OEk,..., OEm möglichst nahe zum Teilnehmer T1nA liegt. Diese topologische Information erhält das Call Center aus dem ISDN-Netz, da die Vermittlungsstellen durch Identifizierungsnummern bereits eindeutig identifiziert sind. Sobald dieser, als erste Organisationseinheit OE1 bezeichnete Standort ermittelt ist, baut die zweite Organisationseinheit OEm einen ersten Kommunikationskanal KK1 zu OE1 auf; OE1 liegt in geringst möglicher Entfernung zum Teilnehmer T1nA. Im Anschluss daran sendet die zweite Organisationseinheit OEm einen Antrag zum Belegen eines Agenten an die Organisationseinheit OE1. Ist in OE1 ein Agent zur Bearbeitung des Antrags frei, so nimmt dieser den Antrag entgegen und fordert seinerseits die Übertragung der Teilnehmerdaten von OEm. Mittels einer Transaktions-Nummer, die im Antrag an den Agenten übermittelt wird, ist sichergestellt, dass der Agent zum Abruf der Daten berechtigt ist. OEm überträgt die Daten vom Datenspeicher DSm in den Datenspeicher DS1 der ersten Call Center Einheit OE1. Nach Eintreffen dieser Kundendaten in OE1 baut der Agent der Einheit OE1 einen zweiten Kommunikationskanal KK2 zum Dienstnutzer, dem Endteilnehmer T1nA, auf. Abschließend erfolgt die Übertragung der Daten über diesen zweiten Übertragungskanal KK2 an den Teilnehmer T1nA.
Für den Fall dass im Standort OE1 auf Grund von Überlastung kein Agent frei ist, ist vorgesehen, dass der Antrag in einer Warteschlange aufgenommen wird. Ist innerhalb eines vorgebbaren Zeitintervalls kein Agent verfügbar, wird auf eine dritte Organisationseinheit OEk umgeschaltet, die zu T1nA in möglichst geringer Entfernung liegt und in der ein Agent verfügbar ist.

Durch die erfindungsgemäße Betriebsweise des Kommunikationsnetzes, eröffnet sich für einen Netzbetreiber die Möglichkeit, netzinterne Kommunikationswege besser zu nutzen und diesen Vorteil einem der am Erbringen der Dienstleistung Beteiligten, beispielsweise einem Call Center Betreiber, weiter zu geben. Durch die bessere Ausnutzung der Netzinfrastruktur ist es möglich, dass Call Center Dienstleistungen kostengünstiger an den Endkunden gelangen.

## Patentansprüche

1. Verfahren zum Betreiben eines Kommunikationsnetzes (KN) bei dem ein Call Center (CC) Daten an einen Kommunikationsteilnehmer (T1nA) übermittelt, wobei das Call Center aus im Kommunikationsnetz topologisch verteilt angeordneten Organisationseinheiten (OE1, ..., OEn, ..., OEm) besteht, die an Vermittlungsknoten VK angeschlossene sind, mit den Schritten:
• Ermitteln einer verfügbaren ersten Organisationseinheit (OE1) welche dem Kommunikationsteilnehmer (T1nA) örtlich am nächsten liegt,
• Herstellen eines ersten Kommunikationskanals(KK1) zwischen der ersten und einer zweiten Organisationseinheit (OEm), die in einem Speicher (DSm) die zu übermittelnden Daten enthält,
• Übertragen der Daten von der zweiten Organisationseinheit (OEm) zur ersten Organisationseinheit (OE1),
• Herstellen eines zweiten Kommunikationskanals (KK2) zwischen der ersten Organisationseinheit (OE1) und dem Kommunikationsteilnehmer (T1nA),
• Übertragen der Daten von der ersten Organisationseinheit (OE1) an den Kommunikationsteilnehmer (T1nA).

2. Verfahren nach Anspruch 1, **dadurch gekennzeichnet, dass** das Kommunikationsnetz das diensteintegrierende digitale Nachrichtennetz ISDN umfasst und das Übertragen der Daten zwischen der zweiten Organisationseinheit (OEm) und der ersten Organisationseinheit (OE1) über den Zentralen Zeichengabekanal erfolgt.

3. Verfahren nach Anspruch 2 **dadurch gekennzeichnet, dass** im Zeichengabekanal das Zeichengabesystem Common Channel Signaling No. 7 verwendet wird.

4. Verfahren nach Anspruch 3, **dadurch gekennzeichnet, dass** beim Ermitteln der ersten Organisationseinheit (OE1) die Identifizierungsnummer des Zeichengabesystems CommonChannel Signaling No. 7 verwendet wird.

5. Verfahren nach zumindest einem der vorstehenden Ansprüche, **dadurch gekennzeichnet, dass** beim Ermitteln der ersten Organisationseinheit (OE1) die Teilnehmernummer des Kommunikationsteilnehmers (T1nA) verwendet wird.

6. Verfahren nach Anspruch 4 oder 5, **dadurch gekennzeichnet, dass** beim Ermitteln der ersten Organisationseinheit (OE1) eine Routingtabelle verwendet wird, die Einträge über die Verfügbarkeit der Organisationseinheiten (OE1, ..., OEk, ..., OEm) enthält.

7. Verfahren nach einem der vorstehenden Ansprüche, **dadurch gekennzeichnet, dass** nach dem Herstellen der Verbindung zwischen der zweiten Organisationseinheit (OEm) und der ersten Organisationseinheit (OE1) die zweite Organisationseinheit(OEm) einen Antrag zum Belegen eines Call Center Agenten in der ersten Organisationseinheit (OE1) übermittelt.

8. Verfahren nach Anspruch 7, **dadurch gekennzeichnet, dass** die Übermittlung des Antrags eine Transaktionsnummer beinhaltet, die einen Agenten in einer Organisationseinheit (OE1, ..., OEk, ..., OEm) berechtigt auf Daten eines Teilnehmers zuzugreifen.

9. Verfahren nach einem der Ansprüche 7 oder 8, **dadurch gekennzeichnet, dass** für den Fall der Nichtverfügbarkeit eines Agenten in der ersten Organisationseinheit (OE1) der Antrag in einer Warteschleife geführt wird und nach Ablauf eines vorgebbaren Zeitintervalls an eine der ersten Organisationseinheit nächstliegende verfügbare Organisationseinheit (OEk) weitergeleitet wird.

10. Verfahren nach zumindest einem der vorstehenden Ansprüche, **dadurch gekennzeichnet, dass** die Daten in der ersten Organisationseinheit (OE1) in einem Speicher (DS1) zwischengespeichert werden.

11. Verfahren zum Betreiben eines Call Centers, das mit einem Kommunikationsnetz interagiert, welches nach einem der vorstehenden Ansprüche betrieben wird.
